# EUROPEAN PATENT SPECIFICATION

(11) **EP 0 579 301 B1**
(45) Date of publication and mention of the grant of the patent: **22.05.1996**
(21) Application number: 93201746.0
(22) Date of filing: 17.06.1993
(51) Int. Cl.: C08G 59/06, C08G 59/24

(54) **Process for producing biphenol skeleton-containing epoxy resins**
Verfahren zur Herstellung von Biphenolskelett aufweisenden Epoxyharzen
Procédé de préparation de résines époxydes ayant une squelette biphénolique

(30) Priority: 19.06.1992 JP 184650/92
(43) Date of publication of application: 19.01.1994
(73) Proprietor: SHELL INTERNATIONALE RESEARCH MAATSCHAPPIJ B.V., NL-2596 HR Den Haag (NL)
(72) Inventor: Murata, Yasuyuki, c/o Yuka Shell Epoxy KK, 4-chome, Minato-ku, Tokyo 106 (JP); Nakanishi, Yoshinori, c/o Yuka Shell Epoxy KK, 4-chome, Minato-ku, Tokyo 106 (JP); Yoshimura, Masanori, c/o Yuka Shell Epoxy KK, 4-chome, Minato-ku, Tokyo 106 (JP)

(56) References cited:
- EP-A- 0 103 282
- GB-A- 986 250
- GB-A- 1 007 854
- GB-A- 2 001 991
- US-A- 2 986 552
- US-A- 3 767 618
- DATABASE WPI Week 8229, Derwent Publications Ltd., London, GB; AN 82-59533 & DD-A-153 882 (VEB LEUNA-WERK W ULBRICH) 10 February 1982
- DATABASE WPI Week 8229, Derwent Publications Ltd., London, GB; AN 82-59533 & DD-A-153 882

## Description

The present invention relates to a process for producing a 4,4'-biphenol skeleton-containing epoxy resin which contains a relatively low amount of hydrolyzable halogens and is capable of giving a cured product having excellent heat-resistance and low-stress property. The resin is particularly useful in the fields of electricity and electronics.

Epoxy resins produced by reacting a phenolic compound with an epihalohydrin contain halogen-containing impurities such as the saponifiable halogens represented by Structural Formula I below and the hydrolyzable halogens represented by Structural Formulas II and III.

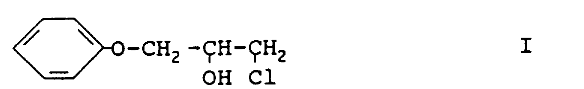

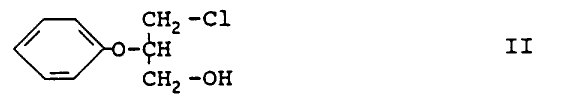

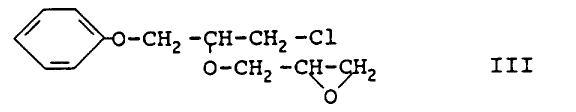

In recent years epoxy resins for use in the fields of electricity and electronics, e.g. for the sealing of semiconductor devices, have been required to satisfy severer requirements with regard to their properties. For example epoxy resins to be used as a sealant for preventing the corrosion of aluminium wiring on semiconductor devices are required to have a lower content of halogen-containing impurities.

Japanese Patent Application (Laid Open) No. 187,420/90 discloses a method for producing 4,4'-biphenol skeleton-containing epoxy resins having a lowered halogen content, by reacting a mixture of a 4,4'-biphenol and an alkyl-substituted biphenol with an epihalohydrin, in the presence of a quaternary ammonium salt as a catalyst followed by a ring-reclosing reaction in an organic solvent by adding an alkali metal hydroxide. The reaction product, has a reduced content of saponifiable halogens, but its hydrolyzable halogen content is not reduced.

Japanese Patent Application (Laid Open) No. 73,578/84 discloses a method for preparing 4,4'-biphenoltype epoxy resins having a lowered halogen content, by reacting a 4,4'-biphenol with epihalohydrin in 1-methoxy-2-propanol (a propylene glycol monomethyl ether), while maintaining the water content in the reaction mixture at 6% by weight or less. However, due to the low water content in the reaction mixture, alkali metal salts of 4,4'-biphenol precipitate, particularly in the initial stage of the reaction, which results in an undesirable increase in the generation of by-products such as polymeric compounds. When 4,4'-biphenol is used as the only starting phenolic compound, a 4,4'-biphenol-type epoxy resin is produced, which is extremely poor in solubility to organic solvents, therefore it is difficult to subject the epoxy resin to a ring-reclosing reaction and thus impossible to reduce the content of saponifiable halogens to a sufficiently low level.

DD-A-153882 discloses a process for the preparation of a low-halogen epoxy resin by reacting a phenolic compound with an epihalohydrin in an aprotic solvent by adding an aqueous solution of an alkali metal hydroxide. The amount of water during the reaction is from 3-12, suitably 6-8 %wt. However, no water at the initial stage of the reaction is present. Further, this reference shows that when a protic solvent in stead of an aprotic solvent is used the amount of saponifiable halogen in the resulting product is higher.

In view of the above it is an object of the present invention to provide a process for producing a 4,4'-biphenol skeleton containing epoxy resin which contains a lowered quantity of halogens, in particular, hydrolyzable halogens, and which provides a cured product having excellent heat-resistance and low stress property, which thus is particularly useful in the fields of electricity and electronics.

Accordingly, the present invention relates to a process for the preparation of a 4,4'-biphenol skeleton-containing epoxy resin by reacting a mixture of phenols containing from 20 to 80% by weight of 4,4'-biphenol with an epihalohydrin, said reaction being carried out:
(a) by adding to the reaction mixture either in a continuous or in an intermittent manner from 0.8 to 2.0 moles of an alkali metal hydroxide, per mole of phenolic hydroxyl groups contained in said mixture of phenols;
(b) in the presence of from 5 to 200% by weight, based on the weight of the epihalohydrin, of one or more glycol monoether(s) as a solvent;
(c) in the presence of more than 6% by weight of water, based on the total weight of the reaction mixture, at least in the initial stage of the reaction which is up to the moment that 0.2 moles of the alkali metal hydroxide has been added; and
(d) by subjecting the epoxy resin thus obtained to a ring-reclosing reaction by adding thereto an alkali metal hydroxide.

The ring-reclosing reaction of the epoxy resin obtained is suitably carried out at the end of the first reaction after removal of unreacted epihalohydrin and organic solvents and after redissolving of the epoxy resin into an organic solvent. The amount of alkali metal hydroxide in the ring-reclosing reaction is suitably from 1 to 10.0 moles per mole of saponifiable halogens.

Suitable polyhydric phenols other than the 4,4'-biphenol, present in the mixture of phenols used in the process of the invention are for example bisphenol A, bisphenol F, resorcin, hydroquinone and tetramethylbiphenol; phenol-novolak resins such as for example cresolnovolak resins, bisphenol A-novolak resins, dicyclopentadiene-phenol resins, terpenephenol resins, naphthol-novolak resins and phenol-aralkyl resins; and polyhydric phenolic resins obtainable by a condensation reaction of various phenols and various aldehydes, such as hydroxybenzaldehyde, crotonaldehyde and glyoxal.

When the content of 4,4'-biphenol in the mixture of phenols is lower than 20%, the epoxy resin thus produced will have an inferior heat-resistance and a low-stress property in the cured state. On the other hand when the content of 4,4'-biphenol is higher than 80% the solubility of the epoxy resin formed in organic solvents will be poor, whereby it becomes impossible to carry out a ring-reclosing reaction in an effective manner. In addition as a result of its high melting point the epoxy resin will be poorly compatible with hardeners.

It is preferred to use a mixture of phenols comprising of from 30 to 70% by weight, based on the total weight of phenols, of 4,4'-biphenol.

The epihalohydrin used in the present invention is usually epichlorohydrin or epibromohydrin and is used in an amount of from 1 to 20 moles, preferably 3 to 10 moles, per mole of phenolic hydroxyl groups as initially present in the mixture of phenols.

Suitable glycol monoethers used as a solvent in the process of the invention include monoalkyl ethers- and monoaryl ethers of glycols such as ethylene glycol, diethylene glycol, propylene glycol and dipropylene glycol. Specific examples of suitable glycol monoethers, are for example ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether and dipropylene glycol monomethyl ether. Of these glycol monoethers, ethylene glycol monomethyl ether, ethylene glycol monoethyl ether, propylene glycol monomethyl ether and propylene glycol monoethyl ether are particularly preferred with regard to, e.g., boiling point.

Preferably the amount of glycol monoethers used in the process of the invention is of from 10 to 100% by weight based on the weight of epihalohydrins. When the amount of glycol monoethers used is lower than 5% by weight, it will be impossible to produce an epoxy resin having a relatively low content of hydrolyzable halogens. When the amount of glycol monoethers used is higher than 200% an epoxy resin will be formed having too high epoxy equivalent weight due to the formation of high molecular weight compounds resulting from undesirable promotion of intermolecular reactions.

The glycol monoethers are particularly suitable as solvents for the process of the present invention since the 4,4'-biphenols and the epoxidated products thereof dissolve very well therein whereas their solubility in other organic solvents is as a rule poor. Moreover the glycol monoethers suppress the formation of hydrolyzable halogens.

Other inert organic solvents which may be used in combination with the glycol monoethers are for example alcohols, such as ethanol and isopropanol; ketones, such as acetone and methyl ethyl ketone; aromatic hydrocarbons, such as benzene, toluene, and xylene; ethers, such as dioxane and ethylene glycol dimethyl ether; and aprotic polar solvents, such as dimethylsulfoxide and dimethylformamide. These other organic solvents may be used in an amount of 200, preferably 100, parts by weight per 100 parts by weight of glycol monoethers.

In the process of the present invention, alkali metal hydroxides are added either in small portions in a continuous manner or in portions in an intermittent manner. The reason why alkali metal hydroxides are added portionwise is to prevent a too vigorous and heterogeneous reaction.

When alkali metal hydroxides are used in an amount of less than 0.8 moles, the reaction between phenolic hydroxyls and epihalohydrins will not be complete, whereas when amounts of more than 2.0 moles are used, undesirable side-reactions cause decomposition of epihalohydrins and the generation of high molecular weight compounds.

The preferred alkali metal hydroxide used is NaOH or KOH. By allowing the reaction to proceed in the presence of water in an amount as defined above at least in the initial stage of the reaction, precipitation of alkali metal salts of 4,4'-biphenol can be prevented.

It is however not always necessary to maintain the above level of water until the reaction is completed. If desired, the water content may be decreased to a level less than the above lower limit after the initial stage, in order to accelerate the reaction.

Catalysts may be used in the process of the present invention. Suitable catalysts are for example quaternary ammonium salts, such as tetramethyl ammonium chloride and tetraethyl ammonium bromide; tertiary amines, such as 2,4,6-(trisdimethylaminomethyl)phenol; imidazoles, such as 2-ethyl-4-methylimidazole and 2-phenylimidazole; phosphonium salts, such as ethyl triphenyl phosphonium iodide; and phosphines, such as triphenyl phosphine.

As examples of inert organic solvents for use in the ring-reclosing reaction, which, as indicated above, can be carried out after completion of the process of the invention are alcohols, such as ethanol and isopropanol; ketones, such as acetone, methyl ethyl ketone, and methyl isobutyl ketone; aromatic hydrocarbons, such as benzene, toluene, and xylene; ethers such as dioxane and ethylene glycol dimethyl ether; glycol monoethers, such as ethylene glycol monomethyl ether, ethylene glycol monoethyl ether, and propylene glycol monomethyl ether; and aprotic polar solvents, such as dimethylsulfoxide and dimethylformamide.

A mixture of 2 or more of these solvents may also be used. These solvents can be used in an amount of 50 to 900 parts by weight, per 100 parts by weight of 4,4'-biphenol skeleton-containing epoxy resins.

Normally an alkali metal hydroxide, usually NaOH or KOH is used in the ring-reclosing reaction, in an amount of 1.0 to 10.0 moles, per mole of saponifiable halogens contained in the epoxy resins subjected to the ring-reclosing reaction. When the amount of alkali metal hydroxides used is too low, reduction of the amount of saponifiable halogens will be insufficient, whereas when the amount of hydroxides used is too high, undesirable side-reactions such as the formation of high molecular compounds will occur.

A typical way of carrying out the process of the present invention for producing biphenol skeleton-containing epoxy resins will be explained in more detail below.

At first, a mixture of phenols containing 20 to 80% by weight of 4,4'-biphenol is dissolved into a mixture of epihalohydrin, glycol monoethers and water at the prescribed ratio. While stirring, an alkali metal hydroxide, in the form of solid or of an aqueous solution, is added to the solution at a temperature of ca. 40 to 120 °C. In order to prevent the reaction of proceeding too vigorously, the continuous or intermittent addition of alkali metal hydroxide is carried out over a period of from 1 to 8 hours. The total reaction time is usually of from 1 to 10 hours.

Water is added at the beginning of the reaction in an amount of not less than 6% by weight. At a later stage of the reaction i.e. after an amount of 0.2 moles of the alkali metal hydroxide has been added to the reaction mixture, water may be removed from the reaction mixture which can be done by interrupting the addition of alkali metal hydroxide, allowing the reaction mixture to stand and removing the aqueous layer formed. Alternatively, water can be removed by azeotropic distillation, and the vapour evaporated from the reaction system is cooled to give a condensed oil/water mixture. After separating water, the oil portion may be returned to the reaction mixture.

After the completion of the reaction, insoluble by-products may be separated by filtration or may be removed by washing with water. The desired 4,4'-biphenol skeleton-containing epoxy resin can be obtained by removing unreacted epihalohydrin and solvents (such as glycol monoethers) by means of vacuum distillation.

In order to further reduce the content of saponifiable halogens, an alkali metal hydroxyl catalyzed ring-reclosing reaction may then be carried out with the epoxy resin, dissolving the latter in an inert organic solvent, at a temperature of 30 to 120 °C for a period of from 0.5 to 8 hours. Thereafter, excess alkali metal hydroxide and other by-products are removed by means of washing with water, followed by removal of organic solvents by vacuum distillation to give a 4,4'-biphenol skeleton-containing epoxy resin having a markedly reduced content of saponifiable halogens.

In accordance with the process of the present invention, the 4,4'-biphenol skeleton-containing epoxy resin obtain not only gives cured products having excellent heat resistance and low-stress property, but also having a markedly reduced content of hydrolyzable halogens.

The present invention will further be illustrated by the following examples.

### Example 1

A 3 litre three-necked flask fitted with a thermometer, a stirrer and a condenser was charged with 186 g of 4,4'-biphenol, 121 g of 3,3',5,5'-tetramethyl-4,4'-biphenol, 1,388 g of epichlorohydrin, 555 g of propylene glycol monomethyl ether and 225 g of distilled water (water content 9.0 wt%). The temperature of the mixture was raised to 50 °C followed by addition of 272 g of aqueous 48.5 wt% sodium hydroxide solution over a period of 2 hours (the total amount of sodium hydroxide added was 1.1 mol, per mol of phenolic hydroxyl groups in the mixture of phenols). During addition of the sodium hydroxide the temperature of the reaction system was raised gradually to 80 °C when all the sodium hydroxide had been added. Thereafter, the reaction was completed by maintaining the system at 80 °C for 30 minutes.

The reaction product obtained was washed with water to remove excessive sodium hydroxide and salts formed as by-products, and excessive epichlorohydrin, propylene glycol monomethyl ether and water were distilled off under reduced pressure, to obtain a crude epoxy resin. In the crude product contained 1,980 ppm of saponifiable chlorine and 2,360 ppm of hydrolyzable chlorine.

Subsequently, the crude epoxy resin was dissolved into 1,450 g of methyl isobutyl ketone. 6 g of aqueous 48.5 wt% sodium hydroxide solution was added to this solution (the total amount of sodium hydroxide added was 2.8 mol, per mol of saponifiable halogen present in the epoxy resin), and a ring-reclosing reaction was allowed to proceed for 1 hour at a temperature of 85 °C. At the end of the reaction, sodium hydrogen phosphate was added to neutralize excess sodium hydroxide. The resulting reaction mixture was washed with water to remove salts generated as by-products, and methyl isobutyl ketone was completely distilled off under reduced pressure, to obtain 446 g of 4,4'-biphenol skeleton-containing epoxy resin. The yield, content of saponifiable chlorine, content of hydrolyzable chlorine and epoxy equivalence of the epoxy resin are shown in Table 1.

### Example 2

140 g of 4,4'-biphenol, 181 g of 3,3',5,5'-tetramethyl-4,4'-biphenol, 1,388 g of epichlorohydrin, 278 g of ethylene glycol monoethyl ether and 199 g of distilled water were charged to a three necked flask (water content 9.0 wt%). The temperature of the mixture was raised followed by addition of 124 g of an aqueous 48.5 wt% sodium hydroxide solution over a period of 1 hour (the total amount of sodium hydroxide added was 0.5 mol, per mol of phenolic hydroxyl groups contained in the mixture of phenols charged). During addition of the sodium hydroxide, the temperature of the reaction system was raised gradually to 90 °C when all the sodium hydroxide had been added.

Subsequently, 124 g of aqueous 48.5 wt% sodium hydroxide solution was added thereto over a period of 30 minutes at 90 °C, during which water was removed from the reaction system by means of azeotropy. The total amount of sodium hydroxide added was 1.0 mol, per mol of phenolic hydroxyl groups in the mixture of phenols. When all the sodium hydroxide was added, the reaction was allowed to proceed for an additional 30 minutes under azeotropic dewatering.

After the completion of the reaction, salts generated as by-products were removed by filtration, and excess epichlorohydrin and ethylene glycol monoethyl ether were distilled off under reduced pressure, to obtain a crude epoxy resin product. The crude epoxy resin contained 850 ppm of saponifiable chlorine and 1,210 ppm of hydrolyzable chlorine.

The crude epoxy resin was dissolved into 1,150 g of methyl isobutyl ketone, followed by addition of 3 g of an aqueous 48.5 wt% sodium hydroxide solution, and a ring-reclosing reaction was allowed to proceed for 1 hour at a temperature of 80 °C. At the end of the reaction, sodium hydrogen phosphate was added thereto to neutralize excess sodium hydroxide. The resulting reaction mixture was washed with water to remove salts generated as by-products, and methyl isobutyl ketone was completely distilled off under reduced pressure, to obtain 462 g of 4,4'-biphenol skeleton-containing epoxy resin. The results of analysis of the epoxy resin are shown in Table 1.

### Example 3

A crude epoxy resin having a content of saponifiable chlorine of 2,500 ppm and a content of hydrolyzable chlorine of 2,880 ppm was produced in the same manner as in Example 1, except that 120 g of o-cresol-novolak resin was used instead of 3,3'-5,5'-tetramethyl-4,4'-biphenol. The water content at the beginning of the reaction was 9.0 wt%, based on the total weight of the reaction mixture, and the total amount of sodium hydroxide added was 1.1 mol, per mol of phenolic hydroxyl groups contained in the mixture of phenols.

The crude epoxy resin was subjected to ring-reclosing reaction in the same manner as in Example 1 except that 7 g of aqueous 48.5 wt% sodium hydroxide solution was used. 443 g of 4,4'-biphenol skeleton-containing epoxy resin was obtained. Results of analysis of the epoxy resin are shown in Table 1.

### Comparative Example 1

A 4 litre three-necked flask fitted with a thermometer, a stirrer and a condenser was charged with 279 g of 4,4'-biphenol, 1,943 g of epichlorohydrin and 777 g of propylene glycol monomethyl ether. After the contents had been dissolved completely, 248 g of aqueous 48.5 wt% sodium hydroxide solution was added over a period of 90 minutes, during which the reaction mixture was boiled at ca. 90 °C and water was azeotropically removed from the reaction system. In this case, it was observed that sodium salt of 4,4'-biphenol precipitated immediately after the start of the addition of the aqueous sodium hydroxide solution. The precipitate disappeared during the reaction, a gel-like substance (presumably a high molecular weight compound) was formed, instead. After the completion of the sodium hydroxide addition, the azeotropical dewatering was continued for additional 30 minutes to complete the reaction.

The reaction mixture was filtrated to remove salts generated as by-products and the gel-like product. The excess epichlorohydrin and propylene glycol monomethyl ether were distilled off under reduced pressure, to obtain 366 g of 4,4'-biphenol skeleton-containing epoxy resin which contained 540 ppm of saponifiable chlorine and 1.020 ppm of hydrolyzable chlorine. The epoxy equivalent weight of the resin was 167. Yield: 81.8%.

Subsequently, it was attempted to dissolve the epoxy resin into organic solvents (e.g. methyl ethyl ketone), in order to subject it to ring-reclosing reaction. However, the epoxy resin was insoluble in conventional organic solvents, and hence it was impossible to subject the resin to ring-reclosing reaction.

### Comparative Example 2

A three-necked flask similar to the one used in Example 1 was charged with 140 g of 4,4'-biphenol, 181 g of 3,3',5,5'-tetramethyl-4,4'-biphenol, 1943 g of epichlorohydrin and 0.3 g of tetramethyl ammonium chloride. After the contents had been dissolved completely, the temperature of the reaction mixture was raised to 110 °C, and the reaction was allowed to proceed for 2 hours. The temperature was then lowered to 95 °C, and 248 g of an aqueous 48.5 wt% sodium hydroxide solution was added over a period of 2 hours, during which the reaction system was azeotropically dewatered. The quantity of sodium hydroxide added was 1.0 mol per mol of phenolic hydroxyl groups contained in the mixture of phenols charged. After the total amount of sodium hydroxide had been added, the azeotropical dewatering was continued for 30 minutes to complete the reaction.

The reaction mixture was subjected to filtration to remove salts generated as by-products, and excess epichlorohydrin was distilled off under reduced pressure, to obtain a crude epoxy resin. The crude epoxy resin contained 1.050 ppm of saponifiable chlorine.

The crude epoxy resin was dissolved into 1,150 g of methyl isobutyl ketone, followed by addition thereto of 4 g of an aqueous 48.5 wt% sodium hydroxide solution. A ring-reclosing reaction was performed for 1 hour at a temperature of 80 °C. After the completion of the reaction, sodium hydrogen phosphate was added to neutralize excess sodium hydroxide. The resulting mixture was washed with water to remove salts generated as by-products, and methyl isobutyl ketone was removed completely under reduced pressure, to obtain 439 g of 4,4'-biphenol skeleton-containing epoxy resin. Results of analysis of the epoxy resin are shown in Table 1.

### Comparative Example 3

In this example, the procedure described in Japanese Patent Application (Laid Open) No. 73,578/84 was repeated.

A 3 litre three-necked flask equipped with a thermometer, a stirrer and a condenser was charged with 279 g of 4,4'-biphenol, 1110 g of epichlorohydrin and 990 g of propylene glycol monomethyl ether. After the contents had been dissolved completely, 248 g of aqueous 48.5 wt% sodium hydroxide was added over a period of 1 hour at a pressure of 190 mmHg at a temperature of 70 °C, during which the reaction system was azeotropically dewatered. The sodium salt of 4,4'-biphenol precipitated immediately after the start of dropping of the aqueous sodium hydroxide solution. Although the precipitate disappeared during the progress of the reaction, a gel-like substance (presumably a high molecular compound) was formed, instead. After all the sodium hydroxide was added, azeotropical dewatering was continued for additional 15 minutes to complete the reaction.

Subsequently, 990 g of water was added, and the resulting reaction mixture was cooled to 30 °C to precipitate an epoxy resin. The resin was collected by filtration, washed with water and methanol, and dried in a vacuum oven. The thus obtained epoxy resin contained an insoluble non-melting gel-like product in an amount of 5% by weight. The epoxy resin contained 450 ppm of saponifiable chlorine and 950 ppm of hydrolyzable chlorine, and the epoxy equivalent weight of the resin was 165. Yield: 335 g (75% of theory).

It was impossible to subject the epoxy resin to ring-reclosing reaction since it was insoluble in conventional organic solvents.

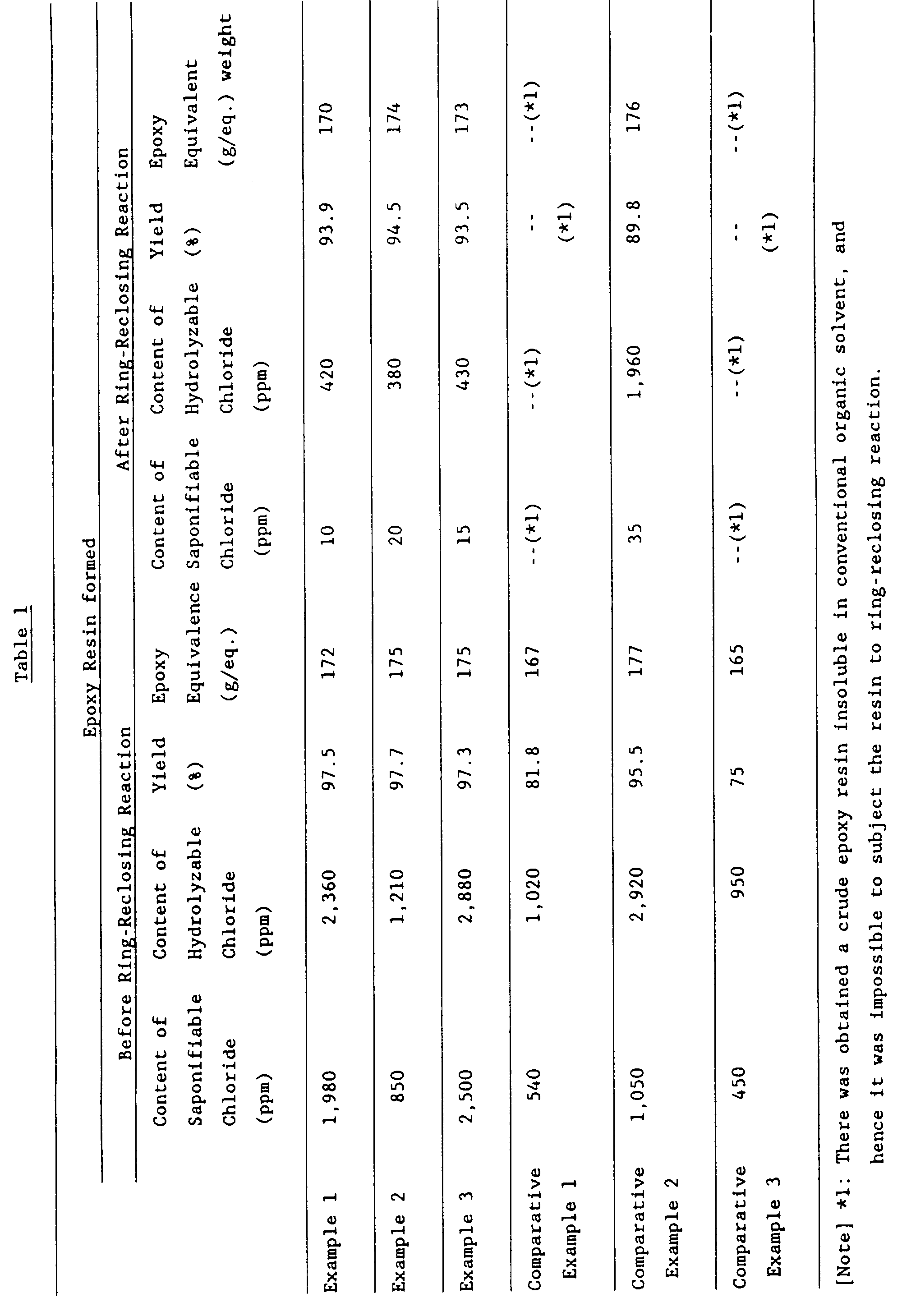

The 4,4'-biphenol skeleton-containing epoxy resins obtainable by the process of the present invention are produced in a relatively high yield and have a substantially reduced content of hydrolyzable halogens, moreover when the resins are subjected to ring-reclosing reaction, the quantity of saponifiable halogens can also be reduced markedly. The cured product has an excellent heat resistance and low stress property and is therefore particularly useful in the fields of electricity and electronics.

## Claims

1. A process for the preparation of a 4,4'-biphenol skeleton-containing epoxy resin by reacting a mixture of phenols containing of from 20 to 80% by weight of 4,4'-biphenol with an epihalohydrin, said reaction being carried out:
(a) by adding to the reaction mixture either in a continuous or in an intermittent manner of from 0.8 to 2.0 moles of an alkali metal hydroxide, per mole of phenolic hydroxyl groups contained in said mixture of phenols;
(b) in the presence of from 5 to 200% by weight, based on the weight of the epihalohydrin, of one or more glycol monoether(s) as a solvent;
(c) in the presence of more than 6% by weight of water, based on the total weight of the reaction mixture, at least in the initial stage of the reaction, which is up to the moment that 0.2 moles of the alkali metal hydroxide has been added; and
(d) by subjecting the epoxy resin thus obtained to a ring-reclosing reaction by adding thereto an alkali metal hydroxide.

2. A process as claimed in claim 1 wherein the ring-reclosing reaction of the epoxy-resin is carried out after removal of unreacted epihalohydrin and solvents from the reaction mixture, and after redissolving of the epoxy resin into an organic solvent.

3. Process as claimed in claim 1 or 2 wherein the ring-reclosing reaction is carried out in the presence of 1.0 to 10.0 moles, per mole of saponifiable halogens contained in said epoxy resin, of an alkali metal hydroxide.

4. A process as claimed in any one of claims 1 to 3 wherein at a later stage, i.e. after an amount of 0.2 moles of the alkali metal hydroxide has been added, water is removed from the reaction mixture.

5. A process as claimed in any one of the claims 1 to 4 wherein of from 3 to 10 moles of epihalohydrin, per mole of phenolic hydroxyl groups as initially present in the reaction mixture, is being used.

6. A process as claimed in any one of the claims 1 to 5 wherein glycol monoether selected from ethylene glycol monomethylether, ethylene glycol monoethylether, propylene glycol monomethylether and propylene glycol monoethylether is employed as solvent in the reaction mixture.

7. A process as claimed in any one of the claims 1 to 6 wherein the alkali metal hydroxide used is natrium hydroxide or potassium hydroxide.

8. A process as claimed in any one of the claims 1 to 7 wherein the epihalohydrin used is epichlorohydrin or epibromohydrin.

## Patentansprüche

1. Verfahren zur Herstellung eines ein 4,4'-Biphenol-Grundgerüst enthaltenden Epoxidharzes, bei dem man ein 20 bis 80 Gew.-% 4,4'-Biphenol enthaltendes Phenolgemisch mit einem Epihalogenhydrin folgendermaßen umsetzt:
(a) unter kontinuierlicher oder diskontinuierlicher Zugabe von 0,8 bis 2,0 mol eines Alkalihydroxids pro Mol an in dem Phenolgemisch enthaltenen phenolischen Hydroxylgruppen zur Reaktionsmischung,
(b) in Gegenwart von 5 bis 200 Gew.-%, bezogen auf das Gewicht des Epihalogenhydrins, eines oder mehrerer Glykolmonoether als Lösungsmittel,
(c) zumindest in der Anfangsphase der Umsetzung, d.h. bis zu dem Zeitpunkt, an dem 0,2 mol des Alkalihydroxids zugegeben wurden, in Gegenwart von mehr als 6 Gew.-% Wasser, bezogen auf das Gesamtgewicht der Reaktionsmischung, und
(d) man unterzieht das so erhaltenene Epoxidharz durch Zugabe eines Alkalihydroxids einer Ringwiederschlußreaktion unterzieht.

2. Verfahren nach Anspruch 1, bei dem man die Ringwiederschlußreaktion des Epoxidharzes nach Entfernung von nicht umgesetztem Epihalogenhydrin und von Lösungsmitteln aus der Reaktionsmischung und nach dem Wiederauflösen des Epoxidharzes in einem organischen Lösungsmittel durchführt.

3. Verfahren nach Anspruch 1 oder 2, bei dem man die Ringwiederschlußreaktion in Gegenwart von 1,0 bis 10,0 mol eines Alkalihydroxids pro Mol an im Epoxidharz enthaltenen verseifbaren Halogenen durchführt.

4. Verfahren nach einem der Ansprüche 1 bis 3, bei dem man in einer späteren Phase, d.h. nach der Zugabe von 0,2 mol des Alkalihydroxids, Wasser aus der Reaktionsmischung entfernt.

5. Verfahren nach einem der Ansprüche 1 bis 4, bei dem man pro Mol an anfänglich in der Reaktionsmischung vorhandenen phenolischen Hydroxylgruppen 3 bis 10 mol Epihalogenhydrin verwendet.

6. Verfahren nach einem der Ansprüche 1 bis 5, bei dem man in der Reaktionsmischung als Lösungsmittel einen unter Ethylenglykolmonomethylether, Ethylenglykol- monoethylether, Propylenglykolmonomethylether und Propylenglykolmonoethylether ausgewählten Glykolmono- ether einsetzt.

7. Verfahren nach einem der Ansprüche 1 bis 6, bei dem man als Alkalihydroxid Natriumhydroxid oder Kaliumhydroxid verwendet.

8. Verfahren nach einem der Ansprüche 1 bis 7, bei dem man als Epihalogenhydrin Epichlorhydrin oder Epibromhydrin verwendet.

## Revendications

1. Procédé de préparation d'une résine époxy contenant un squelette de 4,4'-biphénol par la réaction d'un mélange de phénols contenant de 20 à 80% en poids de 4,4'-biphénol avec une épihalohydrine, ladite réaction étant entreprise :
(a) en ajoutant au mélange réactionnel, de manière continue ou intermittente, de 0,8 à 2,0 moles d'un hydroxyde de métal alcalin, par mole de radicaux hydroxyle phénoliques contenus dans le mélange de phénols;
(b) en présence de 5 à 200% en poids, sur base du poids de l'épihalohydrine, d'un ou plusieurs monoéthers de glycols comme solvants;
(c) en présence de plus de 6% en poids d'eau, sur base du poids total du mélange réactionnel, au moins au cours du stade initial de la réaction, qui s'étend jusqu'au moment où 0,2 mole d'hydroxyde de métal alcalin a été ajoutée; et
(d) en soumettant la résine époxy ainsi obtenue à une réaction de recyclisation en lui ajoutant un hydroxyde de métal alcalin.

2. Procédé suivant la revendication 1, caractérisé en ce que l'on entreprend la réaction de recyclisation de la résine époxy après l'élimination de l'épihalohydrine non entrée en réaction et des solvants du mélange réactionnel et après redissolution de la résine époxy dans un solvant organique.

3. Procédé suivant la revendication 1 ou 2, caractérisé en ce que l'on entreprend la réaction de recyclisation en présence de 1,0 à 10,0 moles, par mole d'halogènes saponifiables contenus dans ladite résine époxy, d'un hydroxyde de métal alcalin.

4. Procédé suivant l'une quelconque des revendications 1 à 3, caractérisé en ce qu'au cours d'un stade ultérieur, c'est-à-dire après l'addition d'une proportion de 0,2 mole d'hydroxyde de métal alcalin, on élimine l'eau du mélange réactionnel.

5. Procédé suivant l'une quelconque des revendications 1 à 4, caractérisé en ce que l'on utilise de 3 à 10 moles d'épihalohydrine par mole de groupes hydroxyle phénoliques initialement présents dans le mélange réactionnel.

6. Procédé suivant l'une quelconque des revendications 1 à 5, caractérisé en ce que l'on utilise, à titre de solvant dans le mélange réactionnel, un monoéther de glycol choisi parmi l'éther monométhylique de l'éthylèneglycol, l'éther monoéthylique de l'éthylèneglycol, l'éther monométhylique du propylèneglycol et l'éther monoéthylique du propylèneglycol.

7. Procédé suivant l'une quelconque des revendications 1 à 6, caractérisé en ce que l'hydroxyde de métal alcalin utilisé est l'hydroxyde de sodium ou l'hydroxyde de potassium.

8. Procédé suivant l'une quelconque des revendications 1 à 7, caractérisé en ce que l'épihalohydrine utilisée est l'épichlorhydrine ou l'épibromhydrine.
